# EUROPEAN PATENT APPLICATION

(11) **EP 2 042 969 A1**
(43) Date of publication of application: **01.04.2009**
(21) Application number: 07291174.6
(22) Date of filing: 28.09.2007
(51) Int. Cl.: G06F 3/01, G06Q 30/00

(54) **Method for determining user reaction with specific content of a displayed page.**

(71) Applicant: Alcatel Lucent, 75008 Paris (FR)
(72) Inventor: Bonnaud, Fabrice, 75008 Paris (FR); Moitier, Pierrick, 75008 Paris (FR)
(74) Representative: Demulsant, Xavier

(57) **Abstract**

Method for determining user reaction with specific content of a displayed page, the method comprising receiving eye tracking movement of the user captured with an eye tracking device, determining a location on the content page that the user is viewing from the monitored eye movements, storing data representative of the tracking movement or determined location in a database, analyzing the data to determine the value of parameters such as the dwell time or user's pupil dilation on at least one specific location of the displayed page, wherein the values of the parameters are compared with predetermined normal figures, the reaction of the user being defined on the calculated gap between normal and current values of the parameters, the reaction of the user being displayed to the page provider in real time.

## Description

### FIELD OF THE INVENTION

The invention relates generally to the field of eye tracking and more particularly to a system and method for analyzing eye tracker data collected from a user viewing a display, and adapting the display according to the user's goals and interests.

### BACKGROUND OF THE INVENTION

Eye tracking techniques have been used for a long time to explore human perceptual and cognitive processes (for a review see Rayner "Eye movements in reading and information processing, 20 years of research" Psychological Bulletin 124, pp. 372-422).

Tracking the user's gaze behavior is a valuable technique to infer the goals and interests of the user. As an example, it is generally assumed that the focus of visual attention normally coincide with the focus of attention.

In some instances, the user can intentionally use her gaze to initiate actions. This was done for physically challenged users, like for people suffering from motor and neuron diseases.

In other instances, natural eye movements of the user can be followed and interpreted to better adapt a system's action to the user's behavior. Some examples are given below.

US 7120880 relates to a method and system for determining a subject interest level to a media content such as the content originating from broadcasted or cable TV, the Web, a computer application, a talk, a classroom lecture, a play. In determining what the subject is attending, preferably the subject's gaze is tracked, e.g. using a remote camera based technique as disclosed in US 4595990, or commercially available systems e.g. *EyeTrac* ® Series 4000 (*Applied Sicence Labs*) or *EyeGaze* ® (*LC Technologies*)*.* Various features are extracted from the observation of the subject: what the subject is looking at, the subject's blink rate and blink duration, six distances to six head gestures, the relative position of his eyebrows, and the relative position of the corners of his mouth. A Bayesian network is used to infer the subject's interest from the measured features. The system generates relevance feedback based on whether the subject is paying attention to certain display.

US 6577329 relates on a display with eye tracking for judging relevance, to a user, of information being displayed on the display in a "ticker like" fashion. Typically, a ticker display uses an area of a computer screen to scroll text and/or image items continuously in a predetermined manner. If the duration of the operator's gaze in greater than or equal to a predetermined time, then a second level of information is displayed (e.g. an abstract). If the duration of the gaze is less than the predetermined time, then the process simply continue displaying the ticker-like items. The dwell time can be user defined.

WO 2006/110472 relates to a method for measuring and evaluating user interaction with electronically presented content. An electronic eye tracker (*Tobii series 1750 ET*) is used to monitor the user's interaction with a web content page. An algorithm is configured to determine the areas on the content page where the user's eyes spend the largest percentage of time or the most probable patterns for eye movement around a content page. Other parameters can be extracted such as pupil dilation for each area of page, larger pupil size being supposed to indicate that the user is not having a problem understanding or comprehending the advertisement being viewed. The user interactions with a content page may be recorded and analyzed real time and the results of the analysis may be used to determine the content presented to the user on a subsequent content page.

Document EP 1213642 relates to a system and method for analyzing eye tracker data collected from a user viewing the display of dynamic hypermedia pages.

In various contexts (e.g. v-learning, video conference), a presentation is performed with slides and commented by a presenter. These slides are displayed on a screen in a room or broadcasted to remote user's computers.

Of course, the presenter would like to have a real time evaluation of the attention comprehension and interest of the attendees in order to adapt the presentation. Real time feedback would alert the presenter that some attendees apparently miss one point that is being presented, further explanations being needed. The presenter could also comment some particular topic if he has some reason to think that this is of major importance for the attendee, in view of their reactions.

Rating forms filed after the presentation does not give a good feedback, since the success of a communication depends on various technical and non technical parameters including current emotional and mental characteristics of both the presenter and the attendees (considered as individuals and as groups of individuals). Depending on these human parameters, one efficient presentation one day could be a failure another day. Moreover, the attendees such as students could hesitate to declare frankly what they think about a presentation being made.

### SUMMARY OF THE INVENTION

In view of the foregoing and other problems of the conventional systems and methods, it is an object of the present invention to reliably assess and communicate a subject's reaction (e.g. interest level) in real time to media content provider.

In a first aspect of the present invention, a method is provided for determining user reaction with specific content of a displayed page, the method comprising receiving eye tracking movement of the user captured with an eye tracking device, determining a location on the content page that the user is viewing from the monitored eye movements, storing data representative of the tracking movement or determined location in a database, analyzing the data to determine the value of parameters such as the dwell time or user's pupil dilation on at least one specific location of the displayed page, wherein the values of the parameters are compared with predetermined normal figures, the reaction of the user being defined on the calculated gap between normal and current values of the parameters, the reaction of the user being displayed to the page provider in real time.

The expression "normal values of the parameters" is used to designate expected values for these parameters. The expectations could be arbitrary or could be the result of a former statistical analysis.

In another aspect of the invention, a computer program product is provided, comprising a computer usable medium having control logic stored therein for causing a computer to assist a page provider to determine user reaction with specific content of said page, said control logic comprising:
- first computer readable program code for receiving eye tracking movement of the user captured with an eye tracking device,
- second computer readable program code for determining a location on the content page that the user is viewing from the monitored eye movements,
- third computer readable program code for storing data representative of the tracking movement or determined location in a database,
- fourth computer readable program code for analyzing the data to determine the value of parameters such as the dwell time or user's pupil dilation on at least one specific location of the displayed page,
- fifth computer readable program code for comparing the values of the parameters with predetermined normal figures, the reaction of the user being defined on the calculated gap between normal and current values of the parameters.

In another aspect of the invention, a communication system is provided, including a computer program product as presented above, a server including at least one page, a subscriber terminal, a user terminal connected to an eye tracking device, and a publishing server comprising computer readable program code for sending the reaction of the user to the subscriber terminal, when the user is viewing said page.

Advantageously, the publishing server is SIP based.

The above and other objects and advantages of the invention will become apparent from the detailed description of preferred embodiments, considered in conjunction with the accompanying drawings.

### BRIEF DESCRIPTION OF THE DRAWINGS

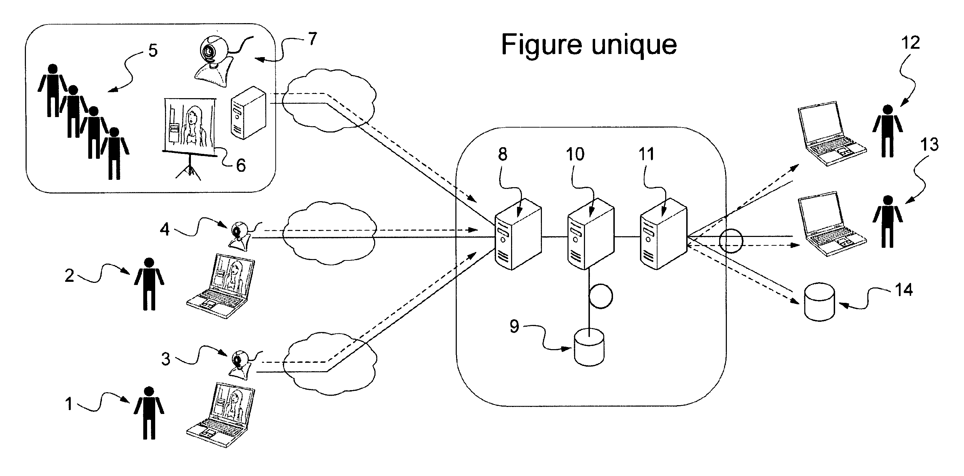

FIG. 1 is a schematic view of a communication system.

### DESCRIPTION OF PREFERRED EMBODIMENTS

An advantageous use of the invention is presented on the accompanying figure. In this use, a presentation is made for attendees. Each attendee is facing an eye tracker, measuring at least the so called *"point of gaze".*

The use of the system presented on figure 1 begins if needed with a calibration of the eye trackers for each attendee. Some of the recent eye tracker support persistent calibration: they do not require calibration for every session. In that case, the attendee has to be identified so that calibration information can be loaded.

Attendees can be remotely connected to a communication system, such as *Teamwork* (Alcatel Lucent) or *Microsoft Netmeeing,* IBM *Sametimes,* and watch a presentation on their personal computer.

The remotely connected attendee 1, 2 are each facing a web cam 3, 4, capturing data for eye tracking system. Other attendees 5 can be present in the conference room, facing the presenter's screen 6 and facing a camera 7 which performs eye tracking.

Various parameters can be measured, illustrating the attendee mental disposition. Dwell times and pupil dilations are examples of such parameters.

The moment when the measure is performed is synchronized to presentation events, for instance a change of page. After each measure, a ticket is sent to a collect server.

In one embodiement, the format of this ticket is XML. This is advantageous since XML (*eXtensible Markup Language*) has the advantages of embedding logical structure information into documents and being independent of a platform. Moreover, XML is widely accepted as a standard format to share and exchange information.

The collect server 8 receives the measure ticket from the attendee's equipment. Evaluation results are calculated in a processing server 10 by balancing the measures with rules, based on attendee skills on the subject of the page or attendee language. Balancing rules are stored in a repository 9.

A publishing server 11 sends the evaluation results for display to the subscribers of the results publication. In the case of a conference, a presenter 12 could be a subscriber, as well as a supervisor 13.

The publishing server 11 is advantageously a SIP based server. This is advantageous since SIP is a versatile, general-purpose signaling protocol for creating, modifying, and terminating sessions that work independent of the underlying transport protocols and the type of session that is being established.

SIP is a text-based protocol, just like HTTP, and is designed to be extended. Because of the extensibility, SIP has become the most popular VoIP signaling protocol to replace H.323. Recently, SIP has been extended to provide presence, event notification and instant messaging services.

SIP can establish a session consisting of multiple media streams, such as audio, video, and text. When a user establishes a session, the media streams can be distributed to a set of devices; for example, the audio stream and the video stream can be setup on two different specialized network appliances.

There are four logical entities defined in SIP: user agents, registrars, proxy servers, and redirect servers. SIP also defines an extensible set of request methods. The following six basic requests in the current are specification: the INVITE request is used to initiate a session, ACK for confirming a session establishment, BYE to terminate a session, REGISTER to register location information, OPTION to determine capabilities and CANCEL to terminate a session that has not been established yet.

The subscribers 12, 13 could communicate with the server 11 with SUBSCRIBE and NOTIFY SIP messages.

SIP requests contain a source address and two destination addresses. The source address which is placed in the *From header* of the request is the SIP URI of the requestor. The destination address which is placed in the *To header* is a destination SIP URI, and is derived by proxy servers. In the *Contact header,* the second destination address indicates where future requests should be sent to. Since the SIP URI has the form of an e-mail address, it appears likely that many users will reuse a number of their email addresses as a SIP URI in the future.

The display format of the result is advantageously customized to the subscriber before sending by the publishing server 11.

The result can be sent and stored in a database 14. Thus, an evolution graph of interest and attention of the attendees can be created from these data.

The present invention has many advantages.

First, the input data are balanced with administrated weighting.

Secondly, the display of the result can be customized to the reader.

Thirdly, a posteriori analysis such as evolution graph of attention can be performed.

Finally, the solution is compliant with a home working use or remote for attendees as for presenter or supervisor.

It has to be noticed that, in some circumstances, only a part of the attendees can be taken into account when determining attendees reaction with specific content of a display page, e.g. a slide of a conference presentation.

For instance, a project can be presented by an architect in a conference room open to the public, the aim of the project being to rebuilt a district. The authorities as well as banks, associations, trade unions could be represented in the spectators. The architect may want to focus on the reaction of some of the attendees only. Normal figures of the parameters have to be predetermined for each category of spectators.

It has also to be noticed that specific features of the attendee have to be taken into account. For instance, eyes movements are not the same for spectators reading from left to right and those reading from right to left, or top to bottom.

## Claims

1. Method for determining user reaction with specific content of a displayed page, the method comprising receiving eye tracking movement of the user captured with an eye tracking device, determining a location on the content page that the user is viewing from the monitored eye movements, storing data representative of the tracking movement or determined location in a database, analyzing the data to determine the value of parameters such as the dwell time or user's pupil dilation on at least one specific location of the displayed page, wherein the values of the parameters are compared with predetermined normal figures, the reaction of the user being defined on the calculated gap between normal and current values of the parameters, the reaction of the user being displayed to the page provider in real time.

2. A computer program product comprising a computer usable medium having control logic stored therein for causing a computer to assist a page provider to determine user reaction with specific content of said page, said control logic comprising:
- first computer readable program code for receiving eye tracking movement of the user captured with an eye tracking device,
- second computer readable program code for determining a location on the content page that the user is viewing from the monitored eye movements,
- third computer readable program code for storing data representative of the tracking movement or determined location in a database,
- fourth computer readable program code for analyzing the data to determine the value of parameters such as the dwell time or user's pupil dilation on at least one specific location of the displayed page,
- fifth computer readable program code for
wherein the values of the parameters are compared with predetermined normal figures, the reaction of the user being defined on the calculated gap between normal and current values of the parameters.

3. A communication system including a computer program product of claim 2, a server including at least one page, a subscriber terminal (12), a user terminal connected to an eye tracking device, and a publishing server (11) comprising computer readable program code for sending the reaction of the user to the subscriber terminal, when the user (1,2,5) is viewing said page.

4. A communication system according to claim 3, wherein the publishing server (11) is SIP based.
